# EUROPEAN PATENT SPECIFICATION

(11) **EP 3 480 087 B1**
(45) Date of publication and mention of the grant of the patent: **21.09.2022**
(21) Application number: 18204006.3
(22) Date of filing: 01.11.2018
(51) Int. Cl.: B62D 53/06, B62D 61/12

(54) **SPLIT TRAILER**
GETEILTER ANHÄNGER
REMORQUE FENDUE

(30) Priority: 01.11.2017 GB 201718086
(43) Date of publication of application: 08.05.2019
(73) Proprietor: Dennison Trailers Unlimited Company, Naas, Co. Kildare (IE)
(72) Inventor: DENNISON, David, Straffan, County Kildare (IE)
(74) Representative: Schütte, Gearoid

(56) References cited:
- EP-A1- 2 604 494
- NL-C1- 1 024 460
- US-A- 4 273 347

## Description

### Introduction

This invention relates to semi-trailers, and in particular to a split trailer type of semi-trailer.

Split trailers are well known and have been used for many years. Essentially a split trailer comprises a front trailer part and a complementary rear trailer part which can be interlocked to form a single trailer, or separated to form two individual trailers, each trailer part having a wheeled chassis and a kingpin for attachment to a tractor vehicle. Thus, for example, the split trailer when interlocked can carry two twenty foot containers, one of the containers being mounted on each trailer part. On reaching a delivery destination the split trailer can be separated, leaving the rear trailer part at a loading bay for offloading for example. The front trailer part can be parked beside the rear trailer part for simultaneous off-loading, or it can be driven to another destination for offloading. For a return journey, or when there is no demand for carrying twenty-foot containers, a forty-foot or a forty-five foot container, or a heavy twenty-foot container trailer straddling both trailer parts can be carried. All this is achieved with a standard tractor unit.

GB 1287484, US 3537727 and GB1131372 all disclose split trailer designs in which the axle of the front trailer part slides back onto the rear trailer part when the two trailer parts are connected together. EP 1728709 and EP 2374699 disclose other split trailer designs which also utilise wheels from both trailer parts when they are coupled together. NL 1 024 460 C1 discloses a split trailer with two trailer parts which can be interlocked to form a single trailer or separated to form two individual trailers.

An alternative way of carrying two twenty-foot containers is to use a rigid truck and a draw-bar trailer. A big disadvantage of this is the rigid truck and a draw-bar trailer are only able to carry the twenty-foot containers. The vehicle would not carry anything else.

A problem arises with a split trailer with regard to the rear trailer part. The tractor unit can be uncoupled from the front trailer part and coupled to the rear trailer part to take the rear trailer part on the road. When the two trailer parts are in combination there is a restriction as to where the axles of the rear trailer part can be positioned. A maximum wheelbase dimension from kingpin to a centre of the bogie on the rear trailer part has to be adhered to, in order to meet turning circle requirements. In Europe this dimension is 8.1 metres. When the trailer is split into two individual trailers, the rear trailer part will have an extremely short wheelbase. Regulations limit the amount of load carried per metre of wheelbase. For the UK the limit is 5.5 tonne per metre. For example, a trailer with a 4.5 metre wheelbase can have a gross combination weight of 24.75 tonne (4.5 × 5.5). Such a short rear trailer is, in effect, not a very useful trailer for weight distribution. Generally then the rear trailer when uncoupled is left at a loading bay and is not taken on the road, even though it is legal to take it on the road subject to meeting the regulations mentioned above. As the axle on the rear trailer part is so close to the kingpin on the rear trailer part, this means it will not allow any weight on the kingpin and is very unbalanced.

The present invention is directed towards overcoming this problem.

### Summary of the Invention

According to the invention there is provided a split trailer type of semi-trailer, including:
a front trailer part and a complementary rear trailer part which can be interlocked to form a single trailer, or separated to form two individual trailers;
each trailer part having a wheeled chassis and a kingpin for attachment to a tractor vehicle; and
an axle mounted at a fixed position at a rear end of the front trailer part which is movable between a lowered position wherein wheels on the axle are in a ground-engaging positon and a raised positon wherein the wheels are lifted clear of the ground;
characterised in that the rear trailer part has wheels mounted on a bogie which is slidably mounted on the chassis of the rear trailer part for longitudinal sliding movement between a forward position and a rearward position on the chassis of the rear trailer part.

Thus, advantageously, when the two trailer parts are separated, the bogie can be moved rearwardly on the chassis of the rear trailer part to increase the wheelbase of the rear trailer part.

In one embodiment of the invention the forward position corresponds to the optimum trailer wheelbase when the two trailer parts are interlocked.

In another embodiment of the invention the rearward position corresponds to the optimum wheelbase for the rear trailer part when it is separated from the front trailer part.

It will be appreciated that by providing longitudinally movable wheels on the rear trailer part, the wheels can be located at the optimum wheelbase positon whenever the rear trailer part is either coupled to or uncoupled from the front trailer part.

In another embodiment the bogie is moveable between a forward position intermediate the ends of the chassis of the rear trailer part and the rearward position at a rear end of the rear trailer part.

In a further embodiment a crash bar is mounted at a rear end of the bogie for sliding movement between a retracted position adjacent to the rear end of the bogie and an extended position projecting rearwardly of the rear end of the bogie.

In another embodiment of the invention rollers are mounted between the bogie and chassis to facilitate relative sliding movement between the bogie and the chassis.

In a further embodiment of the invention a skid on one of the bogie and the chassis slidably engages a complementary slide rail on the other of the bogie and the chassis to facilitate relative sliding movement between the bogie and the chassis.

In another embodiment of the invention a front end of the rear trailer part is nestable within a rear end of the front trailer part when the trailer parts are interlocked.

In another embodiment of the invention each trailer part is a skeletal trailer for carrying a container box with twistlocks being provided on the chassis to releasably secure a container box on the chassis of the trailer part.

In another embodiment of the invention each trailer part has a refrigerated load carrying compartment mounted on the chassis.

In another embodiment of the invention each trailer part has a curtain sided load carrying compartment mounted on the chassis.

### Brief Description of the Drawings

The invention will be more clearly understood by the following description of some embodiments thereof, given by way of example only, with reference to the accompanying drawings, in which:
Fig. 1 is an elevational view of a split trailer according to the invention shown in an interlocked position;
Fig. 2 is an elevational view of the split trailer shown in a separated position;
Fig. 3 is an elevational view showing a rear trailer part of the split trailer shown in another position of use;
Fig. 4 is an elevational view of another split trailer according to a second embodiment of the invention;
Fig. 5 is an elevational view of the split trailer of Fig. 4 with trailer parts shown in a separated positon;
Fig. 6 is an elevational view of a rear trailer part of the split trailer of Fig. 4 shown in another position of use;
Fig. 7 is a perspective view of a split trailer according to the invention shown in an interlocked position;
Fig. 8 is an elevational view of the split trailer of Fig. 7;
Fig. 9 is an exploded perspective view of the split trailer of Fig. 7 which is shown in a separated position;
Fig. 10 is an elevational view of a front trailer part of the split trailer of Fig. 7;
Fig. 11 is an elevational view of a rear trailer part of the split trailer of Fig. 7;
Fig. 12 is a perspective view of the rear trailer part with a bogie shown in a forward position of use;
Fig. 13 is an elevational view of the rear trailer part with the bogie shown in a forward position;
Fig. 14 is a perspective view of the rear trailer part with the bogie shown in a rearward position of use; and
Fig. 15 is an elevational view of the rear trailer part with the bogie shown in the rear position of use.

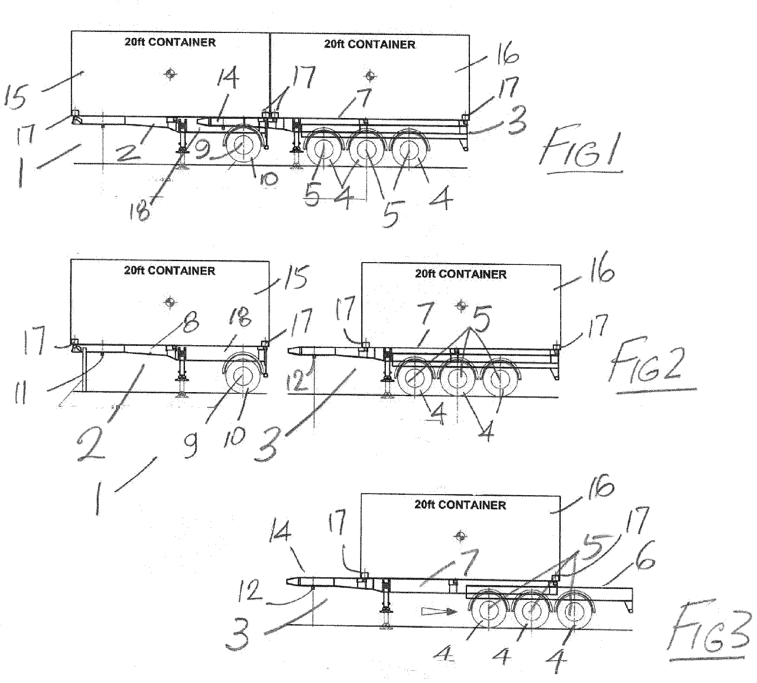

Referring to the drawings, and in initially to Figs. 1 to 3 thereof, there is illustrated a split trailer according to the invention indicated generally by the reference numeral 1. The split trailer 1 has a front trailer part 2 and a complementary rear trailer part 3 which can be interlocked as shown in Fig. 1 to form a single trailer, or separated to form two individual trailers 2, 3 as shown in Fig. 2. The rear trailer part 3 has wheels 4, in this case mounted on three axles 5 mounted on a bogie 6 which is slidably mounted on a chassis 7 of the rear trailer part 3 for longitudinal sliding movement between a forward positon on the chassis 7 as shown in Fig. 1 and Fig. 2 and a rearward position on the chassis 7 as shown in Fig. 3.

The front trailer part 2 has a skeletal chassis 8 mounted by an axle 9 on wheels 10. The axle 9 is height-adjustable and can be moved between a raised stored position as shown in Fig. 1 when the trailer parts 2, 3 are interlocked and a lowered operative position as shown in Fig. 2 when the trailer parts 2, 3 are separated. A kingpin 11 is mounted at a front of the chassis 8 for towing the front trailer part 2 in the usual way.

The rear trailer part 3 also comprises a skeletal chassis 7 and has a kingpin 12 at a front end 14 of the chassis 7 for towing the rear trailer part 3 in the usual way. The drawings show the split trailer 1 carrying two twenty-foot containers 15, 16, one of the containers 15, 16 being mounted on each trailer part 2, 3 by twistlocks 17 in the usual way.

Fig. 1 shows the two trailer parts 2, 3 interlocked with the front end 14 of the rear trailer part 3 nesting within a rear part 18 of the chassis 8 of the front trailer part 2. Locking pins (not shown) are provided to secure the two trailer parts 2, 3 together in the interlocked position. In this position the axle 9 on the front trailer part 2 is raised and inoperative, the split trailer 1 being supported on the rear axles 5 on the bogie 6 of the rear trailer part 3.

When required, the two trailer parts 2, 3 can be uncoupled and separated as shown in Fig. 2 and each trailer part 2, 3 can then be towed separately by a tractor vehicle if required. To improve the stability of the rear trailer part 3 and improve the load carrying capability of the rear trailer part 3, the bogie 6 can be moved rearwardly on the chassis 7 as shown in Fig. 3 to increase the wheelbase of the rear trailer part 3 to facilitate the carriage of maximum legal loads.

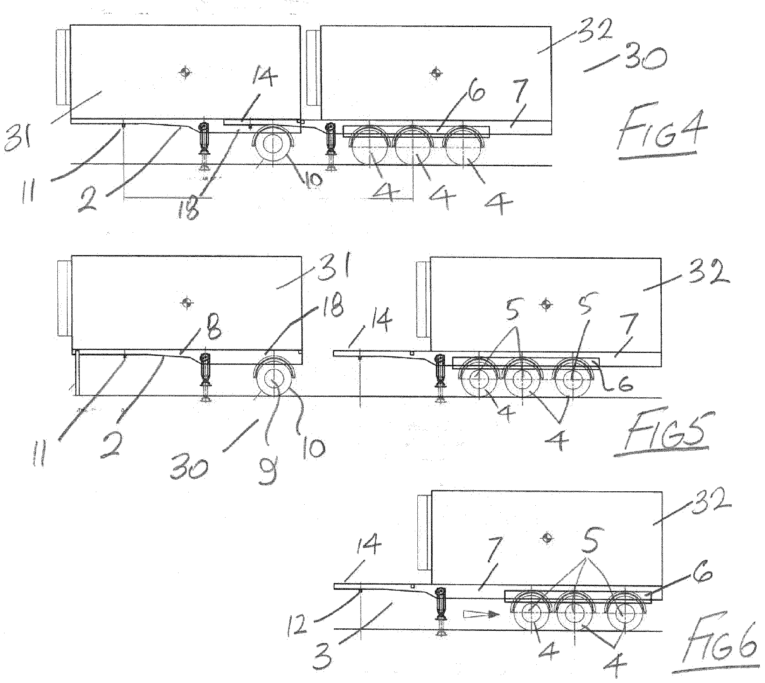

Referring now to Figs. 4 to 6, there is shown another split trailer according to a second embodiment of the invention indicated generally by the reference numeral 30. Parts similar to those described previously are assigned the same reference numerals. In this case instead of trailers adapted to carry containers, a fixed load compartment such as a fridge compartment 31, 32 is provided on each trailer part 2, 3.

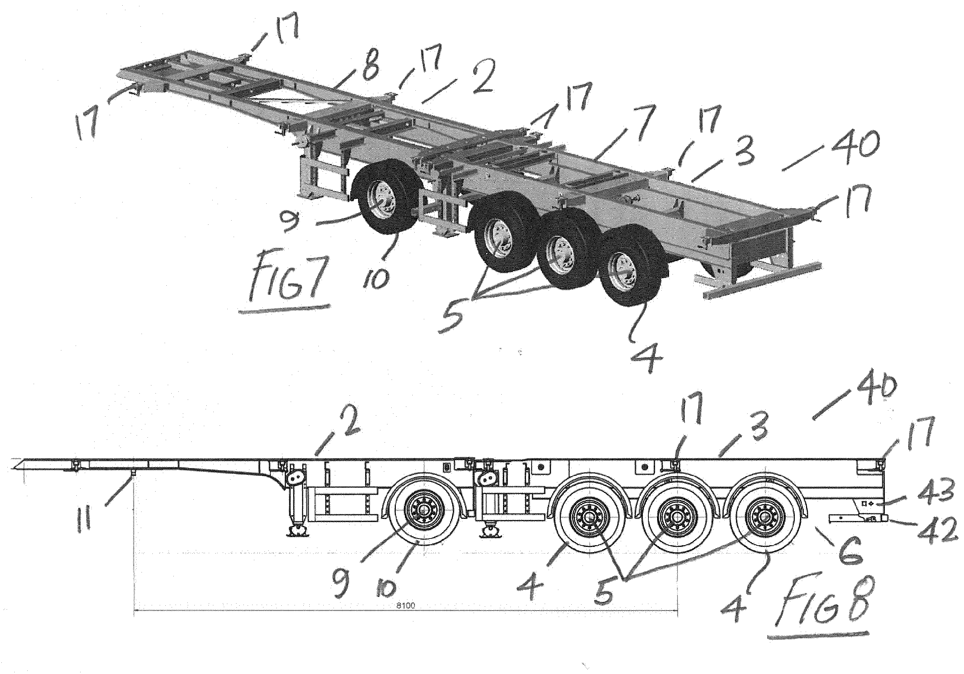

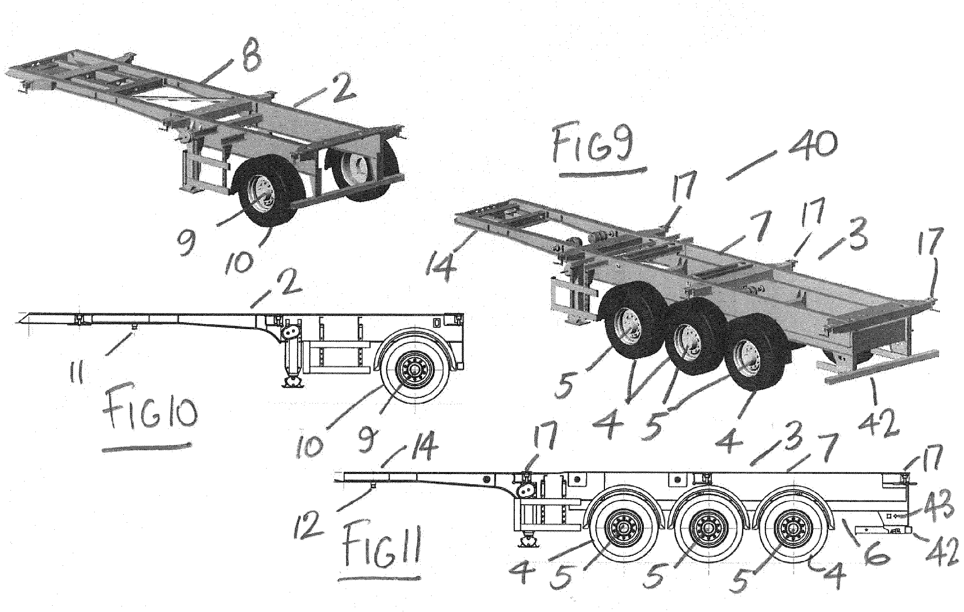

Referring to Figs. 7 to 15, there is shown a split trailer according to the invention, indicated generally by the reference numeral 40. This is largely similar to the split trailer described previously and like parts are assigned the same reference numerals.

Fig. 7 shows the split trailer 40 in the combined configuration in which the two trailer parts 2, 3 are interconnected to form a single composite trailer. It would be noted that the wheels 10 on the axle 9 of the front trailer part 2 are in the raised stored position and the front trailer part is fully supported by the axles 5 on the bogey 6 of the rear trailer part 3. The wheel base between the kingpin 11 and the centre axle 5 on the bogey 6 with the bogey 6 in a forward position on the rear chassis 7 is 8,100mm.

A crash bar 42 is mounted at a rear end of the bogey 6 on a support 43 for a sliding movement between a retracted position adjacent the rear end of the bogey 6 as shown in Fig. 8 and an extended position projecting rearwardly of the rear end of the bogey 6.

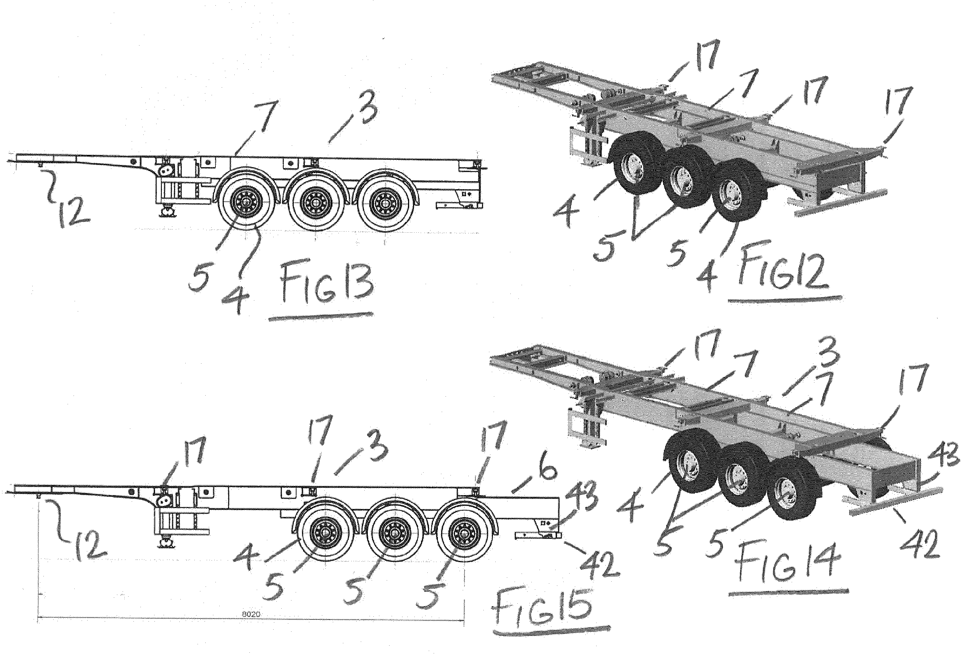

It will be noted from Figs. 13 and 15 that the bogey 6 is slidably mounted on the chassis 7 for movement between a forward position intermediate the ends of the chassis 7 of the rear trailer part 3 as shown in Fig. 13 and a rearward position at a rear end of the rear trailer part 3 as shown in Fig. 15. In the rearward position shown in Fig. 15 the wheel base between the kingpin 12 and the rear most axle 5 on the bogey 6 is 8,020mm. The bogey 6 will slide on the chassis 7 when a container or other load is mounted on the chassis 7. In other words, the rear chassis 7 forms a load carrying platform and the bogey 6 is slideable relative to the load carrying platform.

It is envisaged that the front axle 9 could be made a steerable axle if desired.

It will be noted that when the split trailer is in the combined configuration two 20 foot containers (as shown in Fig. 1), or a single 40 foot container, or a single 45 foot container, can be mounted on the chassis. When the two trailer parts 2,3 are separated, each trailer part 2,3 can carry a single 20 foot container. Also, it is envisaged that the rear trailer part might be configured to provide an option to carry a 30 foot container when in the separated position.

The chassis on each trailer part 2,3 may be configured to carry any suitable load. The embodiments described herein show container boxes or a fridge compartment mounted on the chassis. Various other load carrying options are possible, such as a box van or the chassis may form a platform trailer with a wooden deck.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the appended claims.

## Claims

1. A split trailer (1) type of semi-trailer, including:
a front trailer part (2) and a complementary rear trailer part (3) which can be interlocked to form a single trailer, or separated to form two individual trailers;
each trailer part (2, 3) having a wheeled chassis (7, 8) and a kingpin (11, 12) for attachment to a tractor vehicle; and
an axle (9) mounted at a fixed position at a rear end (18) of the front trailer part (2) which is movable between a lowered position wherein wheels (10) on the axle (9) are in a ground-engaging position and a raised position wherein the wheels (10) are lifted clear of the ground;
**characterised in that** the rear trailer part (3) has wheels (4) mounted on a bogie (6) which is slidably mounted on the chassis (7) of the rear trailer part (3) for longitudinal sliding movement between a forward position and a rearward position on the chassis (7) of the rear trailer part (3).

2. The split trailer (1) as claimed in claim 1 wherein the forward position corresponds to the optimum trailer wheelbase when the two trailer parts (2, 3) are interlocked.

3. The split trailer (1) as claimed in claim 1 or claim 2 wherein the rearward position corresponds to the optimum wheelbase for the rear trailer part (3) when it is separated from the front trailer part (2).

4. The split trailer (1) as claimed in any preceding claim wherein rollers are mounted between the bogie (6) and chassis (7) to facilitate relative sliding movement between the bogie (6) and the chassis (7).

5. The split trailer (1) as claimed in any preceding claim wherein the bogey (6) is moveable between the forward position intermediate the ends of the chassis (7) of the rear trailer part (3) and the rearward position at a rear end of the rear trailer part (3).

6. The split trailer (40) as claimed in any preceding claim wherein a crash bar (42) is mounted at a rear end of the bogey (6) for sliding movement between a retracted position adjacent the rear end of the bogey (6) and an extended position projecting rearwardly of the rear end of the bogey (6).

7. The split trailer (1) as claimed in any one of claims 1 to 3 wherein a skid on one of the bogie (6) and the chassis (7) slidably engages a complementary slide rail on the other of the bogie (6) and the chassis (7) to facilitate relative sliding movement between the bogie (6) and the chassis (7).

8. The split trailer (1) as claimed in any preceding claim wherein the front end (14) of the rear trailer part (3) is nestable within a rear end (18) of the front trailer part (2) when the trailer parts (2, 3) are interlocked.

9. The split trailer (1) as claimed in any preceding claim wherein each trailer part (2, 3) is a skeletal trailer for carrying a container box (15, 16) with twistlocks (17) being provided on the chassis (7, 8) to releasably secure a container box (15, 16) on the chassis (7, 8) of the trailer part (2, 3).

10. The split trailer (30) as claimed in any one of claims 1 to 6 wherein each trailer part (2, 3) has a refrigerated load carrying compartment (31, 32) mounted on the chassis (7, 8).

11. The split trailer (1) as claimed in any one of claims 1 to 6 wherein each trailer part (2, 3) has a curtain sided load carrying compartment mounted on the chassis (7, 8).

## Patentansprüche

1. Sattelauflieger von der Art eines geteilten Anhängers (1), einschließlich:
eines vorderen Anhängerteils (2) und eines komplementären hinteren Anhängerteils (3), die miteinander verriegelt werden können, um einen einzigen Anhänger auszubilden, oder getrennt werden können, um zwei einzelne Anhänger auszubilden;
wobei jedes Anhängerteil (2, 3) ein Fahrgestell (7, 8) mit Rädern und einem Lenkzapfen (11, 12) für eine Befestigung an einem Zugfahrzeug aufweist; und
einer Achse (9), die an einer fixierten Position an einem hinteren Ende (18) des vorderen Anhängerteils (2) montiert ist, das zwischen einer abgesenkten Position bewegbar ist, wobei sich Räder (10) auf der Achse (9) in einer Bodeneingriffsposition und einer erhöhten Position befinden, wobei die Räder (10) deutlich von dem Boden abgehoben sind;
**dadurch gekennzeichnet, dass** das hintere Anhängerteil (3) Räder (4) aufweist, die an einem Achsaggregat (6) montiert sind, das auf dem Fahrgestell (7) des hinteren Anhängerteils (3) für eine Längsgleitbewegung zwischen einer vorwärts gerichteten Position und einer rückwärts gerichteten Position auf dem Fahrgestell (7) des hinteren Anhängerteils (3) gleitbar montiert ist.

2. Geteilter Anhänger (1) nach Anspruch 1, wobei die vorwärts gerichtete Position dem optimalen Radstand des Anhängers entspricht, wenn die zwei Anhängerteile (2, 3) miteinander verriegelt sind.

3. Geteilter Anhänger (1) nach Anspruch 1 oder 2, wobei die rückwärts gerichtete Position dem optimalen Radstand für das hintere Anhängerteil (3) entspricht, wenn es von dem vorderen Anhängerteil (2) getrennt ist.

4. Geteilter Anhänger (1) nach einem der vorhergehenden Ansprüche, wobei Rollen zwischen dem Achsaggregat (6) und dem Fahrgestell (7) montiert sind, um eine relative Gleitbewegung zwischen dem Achsaggregat (6) und dem Fahrgestell (7) zu ermöglichen.

5. Geteilter Anhänger (1) nach einem der vorhergehenden Ansprüche, wobei das Achsaggregat (6) zwischen den Zwischenenden der vorwärts gerichteten Position des Fahrgestells (7) des hinteren Anhängerteils (3) und der rückwärts gerichteten Position an einem hinteren Ende des hinteren Anhängerteils (3) bewegbar ist.

6. Geteilter Anhänger (40) nach einem der vorhergehenden Ansprüche, wobei ein Rammschutzbügel (42) an einem hinteren Ende des Achsaggregats (6) für eine Gleitbewegung zwischen einer eingezogenen Position angrenzend an das hintere Ende des Achsaggregats (6) und einer ausgefahrene Position, die von dem hinteren Ende des Achsaggregats (6) nach hinten vorsteht, montiert ist.

7. Geteilter Anhänger (1) nach einem der Ansprüche 1 bis 3, wobei eine Kufe an einem der Achsaggregate (6) und dem Fahrgestell (7) gleitbar in eine komplementäre Gleitschiene an dem anderen von Achsaggregat (6) und dem Fahrgestell (7) eingreift, um eine relative Gleitbewegung zwischen dem Achsaggregat (6) und dem Fahrgestell (7) zu ermöglichen.

8. Geteilter Anhänger (1) nach einem der vorhergehenden Ansprüche, wobei das vordere Ende (14) des hinteren Anhängerteils (3) innerhalb eines hinteren Endes (18) des vorderen Anhängerteils (2) einschachtelbar ist, wenn die Anhängerteile (2, 3) miteinander verriegelt sind.

9. Geteilter Anhänger (1) nach einem der vorhergehenden Ansprüche, wobei jeder Anhängerteil (2, 3) ein Skelettanhänger für ein Tragen einer Containerbox (15, 16) ist, wobei Riegelbolzen (17) an dem Fahrgestell (7, 8) bereitgestellt sind, um eine Containerbox (15, 16) auf dem Fahrgestell (7, 8) des Anhängerteils (2, 3), lösbar zu sichern.

10. Geteilter Anhänger (30) nach einem der Ansprüche 1 bis 6, wobei jeder Anhängerteil (2, 3) ein gekühltes lasttragfähiges Abteil (31, 32) aufweist, das auf dem Fahrgestell (7, 8) montiert ist.

11. Geteilter Anhänger (1) nach einem der Ansprüche 1 bis 6, wobei jeder Anhängerteil (2, 3) ein lasttragfähiges Abteil mit einer Seitenplane aufweist, das auf dem Fahrgestell (7, 8) montiert ist.

## Revendications

1. Une semi-remorque de type remorque divisée (1), comportant :
une partie de remorque avant (2) et une partie de remorque arrière complémentaire (3) qui peuvent être emboîtées pour former une seule remorque ou séparées pour former deux remorques individuelles ;
chaque partie de remorque (2, 3) ayant un châssis à roues (7, 8) et une cheville d'attelage (11, 12) pour attacher à un véhicule tracteur ; et
un essieu (9) monté à une position fixe à une extrémité arrière (18) de la partie de remorque avant (2) qui est mobile entre une position abaissée, les roues (10) sur l'essieu (9) étant dans une position en prise avec le sol et une position relevée, les roues (10) étant soulevées du sol ;
**caractérisée en ce que** la partie arrière de remorque (3) a des roues (4) montées sur un bogie (6) qui est monté de façon coulissante sur le châssis (7) de la partie arrière de remorque (3) pour un mouvement de coulissement longitudinal entre une position avant et une position arrière sur le châssis (7) de la partie arrière de remorque (3).

2. Remorque divisée (1) selon la revendication 1, dans laquelle la position avant correspond à l'empattement optimal de la remorque lorsque les deux parties de remorque (2, 3) sont emboîtées.

3. Remorque divisée (1) selon la revendication 1 ou la revendication 2, dans laquelle la position arrière correspond à l'empattement optimal pour la partie de remorque arrière (3) lorsqu'elle est séparée de la partie de remorque avant (2).

4. Remorque divisée (1) selon l'une quelconque des revendications précédentes, dans laquelle des rouleaux sont montés entre le bogie (6) et le châssis (7) pour faciliter le mouvement de coulissement relatif entre le bogie (6) et le châssis (7).

5. Remorque divisée (1) selon l'une quelconque des revendications précédentes, dans laquelle le bogie (6) est mobile entre la position avant entre les extrémités du châssis (7) de la partie de remorque arrière (3) et la position arrière à une extrémité arrière de la partie arrière de la remorque (3).

6. Remorque divisée (40) selon l'une quelconque des revendications précédentes, dans laquelle une barre de protection (42) est montée à une extrémité arrière du bogie (6) pour un mouvement de coulissement entre une position rétractée adjacente à l'extrémité arrière du bogie (6) et une position déployée en saillie vers l'arrière de l'extrémité arrière du bogie (6).

7. Remorque divisée (1) selon l'une quelconque des revendications 1 à 3, dans laquelle un patin sur le bogie (6) ou le châssis (7) vient en prise de manière coulissante sur une glissière complémentaire sur l'autre du bogie (6) et du châssis (7) pour faciliter le coulissement relatif entre le bogie (6) et le châssis (7).

8. Remorque divisée (1) selon l'une quelconque des revendications précédentes, dans laquelle l'extrémité avant (14) de la partie de remorque arrière (3) est emboîtable dans une extrémité arrière (18) de la partie de remorque avant (2) lorsque les parties de remorque (2, 3) sont emboîtées.

9. Remorque divisée (1) selon l'une quelconque des revendications précédentes, dans laquelle chaque partie de remorque (2, 3) est une remorque squelettique pour transporter une boîte de conteneur (15, 16) avec des verrous rotatifs (17) étant fournis sur le châssis (7, 8) pour fixer de manière amovible une boîte de conteneur (15, 16) sur le châssis (7, 8) de la partie remorque (2, 3).

10. Remorque divisée (30) selon l'une quelconque des revendications 1 à 6, dans laquelle chaque partie de remorque (2, 3) a un compartiment de transport de charge réfrigéré (31, 32) monté sur le châssis (7, 8).

11. Remorque divisée (1) selon l'une quelconque des revendications 1 à 6, dans laquelle chaque partie de remorque (2, 3) a un compartiment de transport de charge à rideaux latéraux monté sur le châssis (7, 8).
